# EUROPEAN PATENT APPLICATION

(11) **EP 2 602 995 A1**
(43) Date of publication of application: **12.06.2013**
(21) Application number: 11828915.6
(22) Date of filing: 22.09.2011
(51) Int. Cl.: H04N 7/173

(54) **CONTENT SUPPLYING DEVICE, CONTENT SUPPLYING METHOD, CONTENT REPRODUCTION DEVICE, CONTENT REPRODUCTION METHOD, PROGRAM, AND CONTENT VIEWING SYSTEM**

(30) Priority: 01.10.2010 US 388999 P; 05.07.2011 US 201161504593 P
(71) Applicant: Sony Corporation, Tokyo 108-0075 (JP)
(72) Inventor: KITAZATO, Naohisa, Tokyo 108-0075 (JP)
(74) Representative: Turner, James Arthur
(86) International application number: PCT/JP2011/071571
(87) International publication number: WO 2012/043358

(57) **Abstract**

The present invention relates to a content supplying device, a content supplying method, a content reproducing device, a content reproducing method, a program, and a content viewing system that make it possible to realize smooth continuous reproduction of broadcast contents and distributed contents related to each other.

A content supplying device according to the present disclosure includes: a generating section for generating a video switch command for making the content reproducing device perform a process related to switching of video contents being reproduced; a broadcasting section for broadcasting the video contents embedded with the generated video switch command via a broadcasting network; and a distributing section for distributing video contents via an Internet. The present disclosure is applicable to content viewing systems using the broadcasting network and the Internet.

## Description

### [Technical Field]

The present disclosure relates to a content supplying device, a content supplying method, a content reproducing device, a content reproducing method, a program, and a content viewing system, and particularly to a content supplying device, a content supplying method, a content reproducing device, a content reproducing method, a program, and a content viewing system that enable broadcast contents broadcast by digital television broadcasting and distributed contents distributed via the Internet to be reproduced in association with each other.

### [Background Art]

Conventionally, digitization of television broadcasting has been promoted, and digital television broadcasting using terrestrial waves, satellite waves, and the like has spread. Not only broadcasting of video contents as so-called programs but also data broadcasting has been realized as digital television broadcasting. According to data broadcasting, it is possible for example to display information related to a program being broadcast and information not related to a program being broadcast (which information not related to a program being broadcast is notification of other programs, news, a weather forecast, traffic information, and the like) (see Patent Literature 1, for example).

Meanwhile, some receiving devices for digital television broadcasting, which receiving devices are typified by digital television receivers, have a VOD (Video On Demand) function that enables video contents desired to be viewed to be obtained via the Internet and reproduced in arbitrary timing.

### [Citation List]

### [Patent Literature]

[PTL 1]
   Japanese Patent Laid-Open No. 2006-50237

### [Summary]

### [Technical Problem]

As described above, a digital television receiver having an existing VOD function can receive and reproduce video contents broadcast by digital television broadcasting (which video contents will hereinafter be referred to as broadcast contents) and video contents distributed via the Internet (which video contents will hereinafter be referred to as distributed contents).

However, smooth continuous reproduction of broadcast contents and distributed contents in such a manner as to alternately switch and display the video of the broadcast contents and the video of the distributed contents that are related to each other, for example, has not been realized.

The present disclosure has been made in view of such a situation, and is to realize smooth continuous reproduction of broadcast contents and distributed contents related to each other.

### [Solution to Problem]

According to a first aspect of the present disclosure, there is provided a content supplying device for supplying video contents to a content reproducing device, the content supplying device including: a generating section for generating a video switch command for making the content reproducing device perform a process related to switching of video contents being reproduced; a broadcasting section for broadcasting the video contents embedded with the generated video switch command via a broadcasting network; and a distributing section for distributing video contents via an Internet.

The generating section can generate the video switch command as a pre-select command for making a user confirm whether to switch the video contents being reproduced prior to timing of switching of the video contents being reproduced, a pre-load command for making the video contents as a switching destination obtained prior to the timing of switching of the video contents being reproduced, or a switch command for making the video contents being reproduced switched.

The generating section can generate the video switch command including an element indicating whether to perform a loopback when returning to a video stream before the switching after switching the video contents being reproduced.

The generating section can generate the video switch command including an element indicating whether to perform user authentication when obtaining the video contents as the switching destination.

The generating section can generate the video switch command as the pre-select command, the pre-load command, the switch command, an enable switch command for setting a state of being switchable to video contents corresponding to a viewpoint specified by the user, or a disable switch command for ending the state of being switchable to video contents corresponding to a viewpoint specified by the user.

The distributing section can also distribute the video contents embedded with the generated video switch command via the Internet.

According to the first aspect of the present disclosure, there is provided a content supplying method of a content supplying device for supplying video contents to a content reproducing device, the content supplying method including: by the content supplying device, a generating step of generating a video switch command for making the content reproducing device perform a process related to switching of video contents being reproduced; a broadcasting step of broadcasting the video contents embedded with the generated video switch command via a broadcasting network; and a distributing step of distributing video contents via an Internet.

According to the first aspect of the present disclosure, there is provided a program for making a computer for supplying video contents to a content reproducing device function as: a generating section for generating a video switch command for making the content reproducing device perform a process related to switching of video contents being reproduced; a broadcasting section for broadcasting the video contents embedded with the generated video switch command via a broadcasting network; and a distributing section for distributing video contents via an Internet.

In the first aspect of the present disclosure, a video switch command for making a content reproducing device perform a process related to switching of video contents being reproduced is generated, the video contents embedded with the generated video switch command are broadcast via a broadcasting network, and video contents are distributed via an Internet.

According to a second aspect of the present disclosure, there is provided a content reproducing device for reproducing video contents supplied from a content supplying device, the content reproducing device including: an obtaining section for obtaining video contents broadcast via a broadcasting network or video contents distributed via an Internet; an analyzing section for analyzing a video switch command embedded in the obtained video contents; and a control section for controlling a process related to switching of the video contents being reproduced according to a result of analysis of the video switch command.

The video switch command can be a pre-select command for making a user confirm whether to switch the video contents being reproduced prior to timing of switching of the video contents being reproduced, a pre-load command for making the video contents as a switching destination obtained prior to the timing of switching of the video contents being reproduced, or a switch command for making the video contents being reproduced switched.

The content reproducing device according to the second aspect of the present disclosure can further include a buffer section for buffering the video contents broadcast via the broadcasting network, wherein the video switch command can include an element indicating whether to perform a loopback when returning to a video stream before the switching after switching the video contents being reproduced.

According to the second aspect of the present disclosure, there is provided a content reproducing method of a content reproducing device for reproducing video contents supplied from a content supplying device, the content reproducing method including: by the content reproducing device, an obtaining step of obtaining video contents broadcast via a broadcasting network or video contents distributed via an Internet; an analyzing step of analyzing a video switch command embedded in the obtained video contents; and a control step of controlling a process related to switching of the video contents being reproduced according to a result of analysis of the video switch command.

According to the second aspect of the present disclosure, there is provided a program for making a computer for reproducing video contents supplied from a content supplying device function as: an obtaining section for obtaining video contents broadcast via a broadcasting network or video contents distributed via an Internet; an analyzing section for analyzing a video switch command embedded in the obtained video contents; and a control section for controlling a process related to switching of the video contents being reproduced according to a result of analysis of the video switch command.

In the second aspect of the present disclosure, video contents broadcast via a broadcasting network or video contents distributed via an Internet are obtained, a video switch command embedded in the obtained video contents is analyzed, and a process related to switching of the video contents being reproduced is controlled according to a result of analysis of the video switch command.

According to a third aspect of the present disclosure, there is provided a content viewing system including a content supplying device and a content reproducing device, wherein the content supplying device includes a generating section for generating a video switch command for making the content reproducing device perform a process related to switching of video contents being reproduced, a broadcasting section for broadcasting the video contents embedded with the generated video switch command via a broadcasting network, and a distributing section for distributing video contents via an Internet. In addition, the content reproducing device includes an obtaining section for obtaining the video contents broadcast via the broadcasting network or the video contents distributed via the Internet, an analyzing section for analyzing the video switch command embedded in the obtained video contents, and a control section for controlling the process related to the switching of the video contents being reproduced according to a result of analysis of the video switch command.

In the third aspect of the present disclosure, a content supplying device generates a video switch command for making a content reproducing device perform a process related to switching of video contents being reproduced, broadcasts the video contents embedded with the generated video switch command via a broadcasting network, and distributes video contents via an Internet. In addition, the content reproducing device obtains the video contents broadcast via the broadcasting network or the video contents distributed via the Internet, analyzes the video switch command embedded in the obtained video contents, and controls the process related to the switching of the video contents being reproduced according to a result of analysis of the video switch command.

### [Advantageous Effect of Invention]

According to the first aspect of the present disclosure, broadcast contents and distributed contents capable of continuous reproduction can be supplied to a receiving side.

According to the second aspect of the present disclosure, broadcast contents and distributed contents related to each other can be reproduced continuously.

According to the third aspect of the present disclosure, smooth continuous reproduction of broadcast contents and distributed contents related to each other can be realized.

### [Brief Description of Drawings]

[FIG. 1]

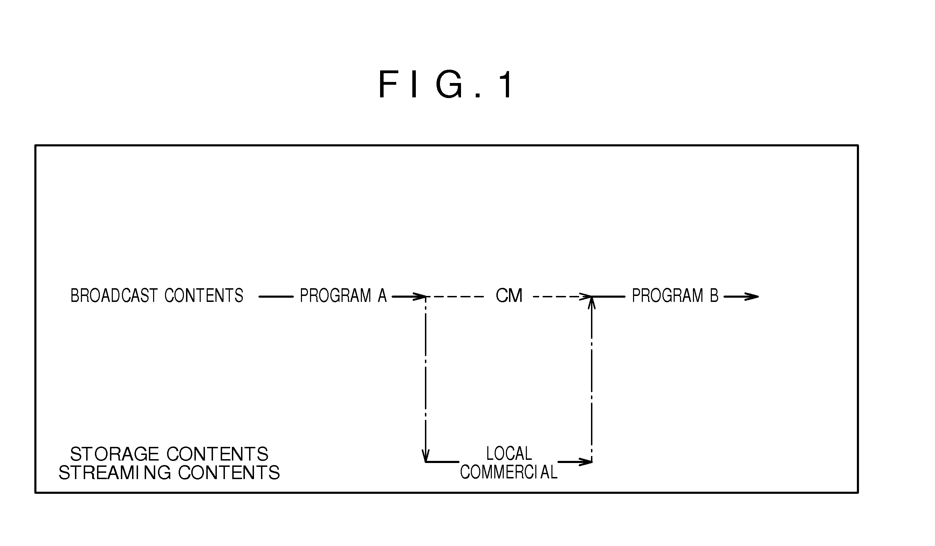

   FIG. 1 is an explanatory diagram of a first continuous reproduction scenario (replacement of a broadcast commercial).
[FIG. 2]

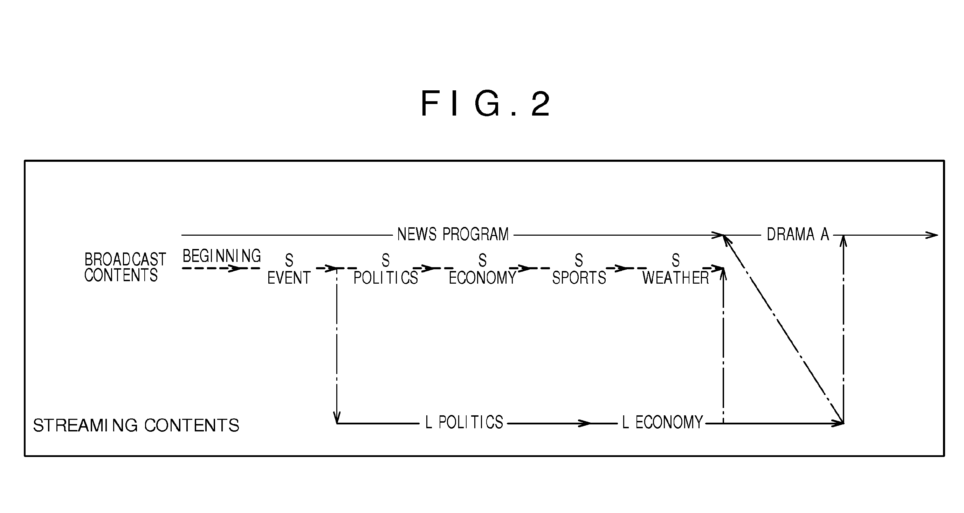

   FIG. 2 is an explanatory diagram of a second continuous reproduction scenario (program of a variable time length).
[FIG. 3]

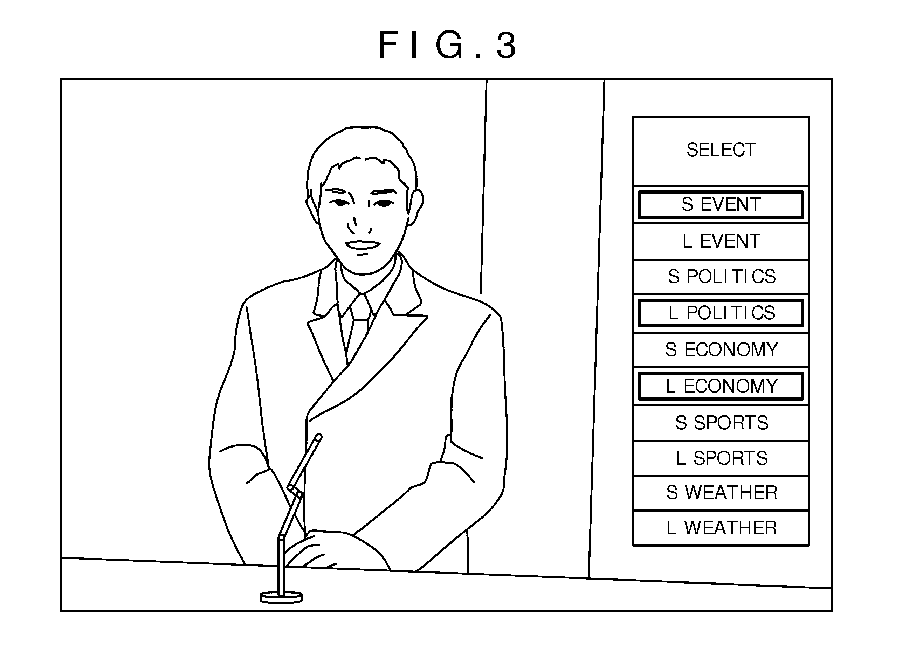

   FIG. 3 is an explanatory diagram of the second continuous reproduction scenario (program of a variable time length).
[FIG. 4]

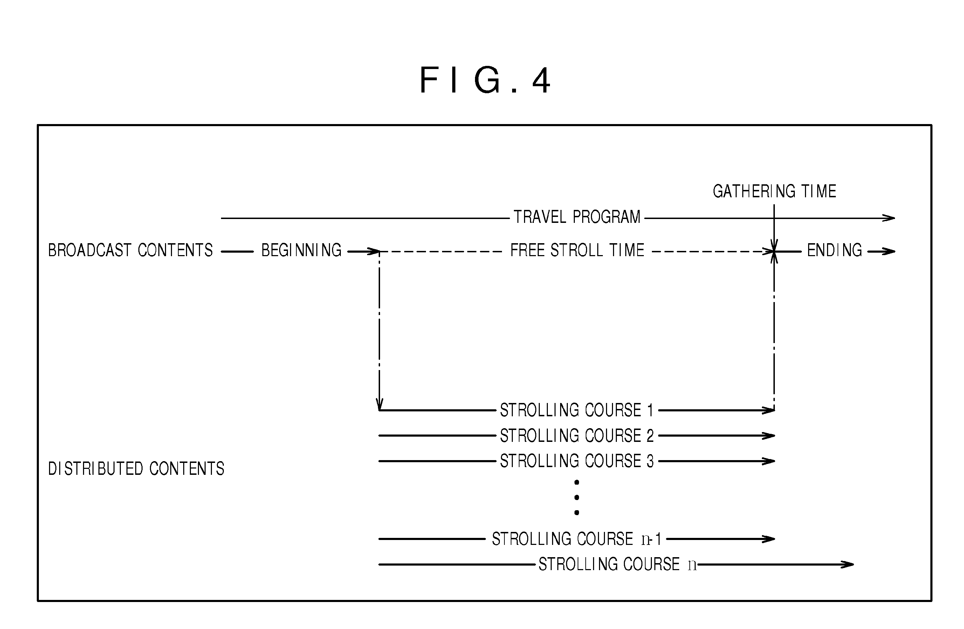

   FIG. 4 is an explanatory diagram of a third continuous reproduction scenario (interactive program).
[FIG. 5]

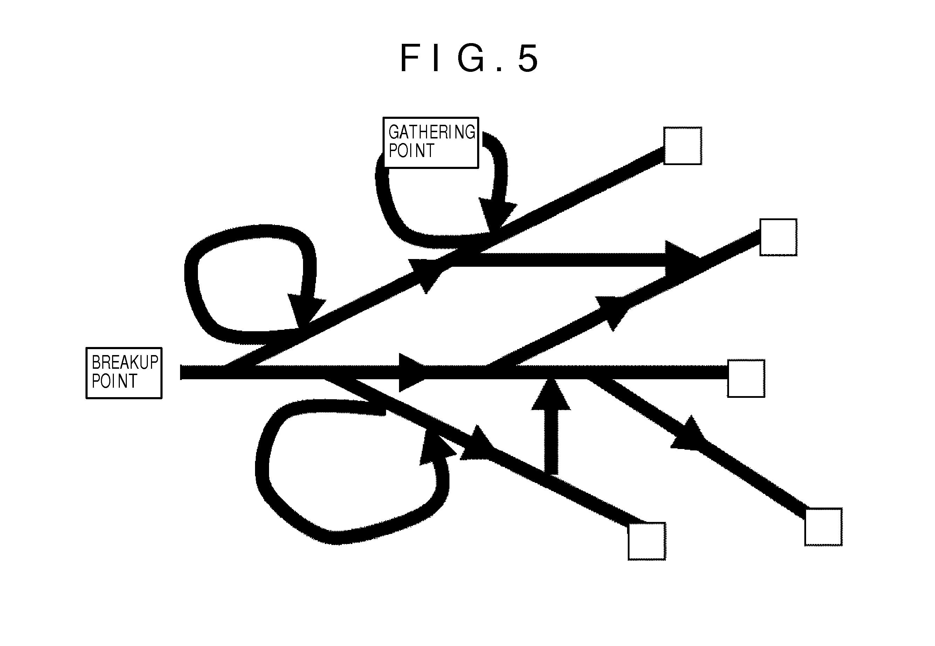

   FIG. 5 is an explanatory diagram of the third continuous reproduction scenario (interactive program).
[FIG. 6]

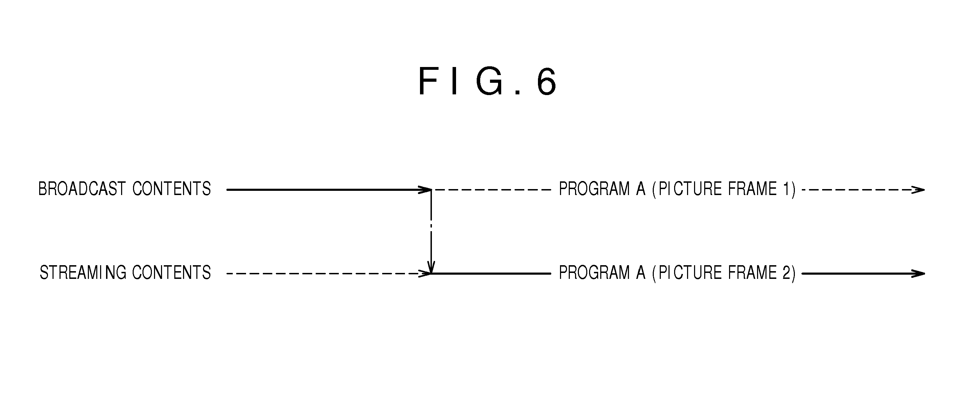

   FIG. 6 is an explanatory diagram of a fourth continuous reproduction scenario (arbitrary picture frame-specified program).
[FIG. 7]

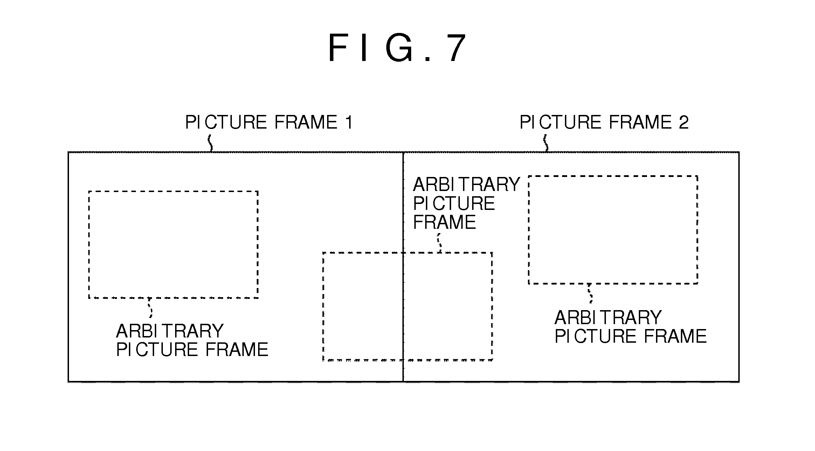

   FIG. 7 is an explanatory diagram of the fourth continuous reproduction scenario (arbitrary picture frame-specified program).
[FIG. 8]

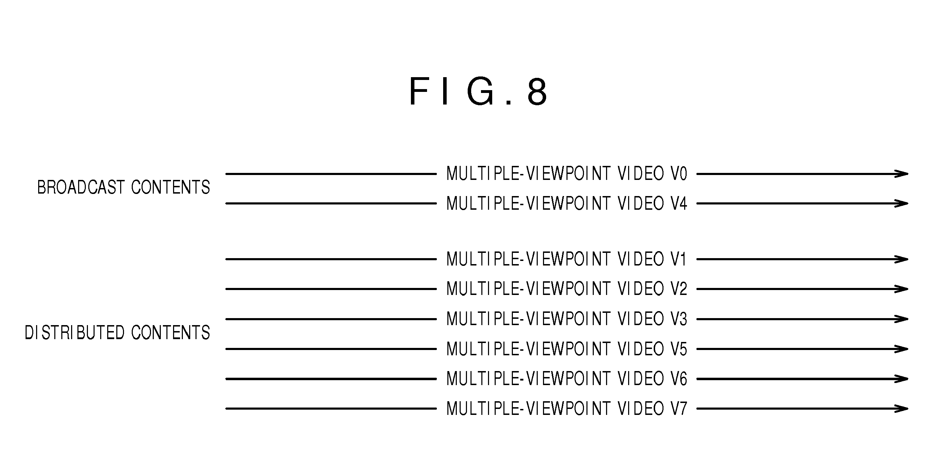

   FIG. 8 is an explanatory diagram of a fifth continuous reproduction scenario (panorama type multiple-viewpoint program).
[FIG. 9]

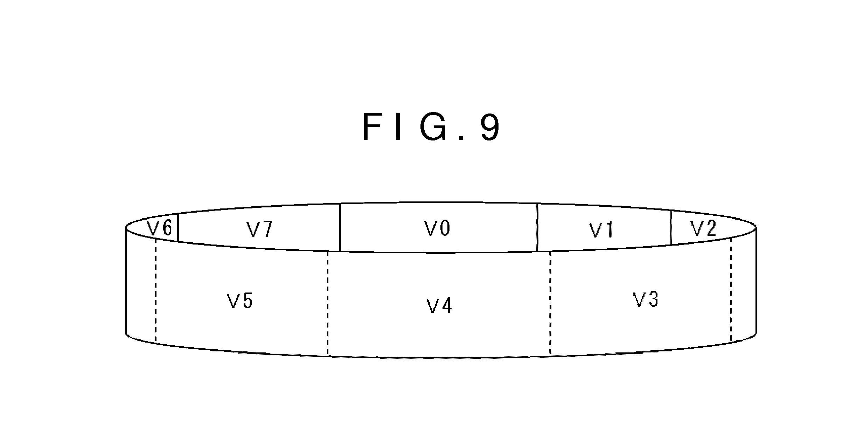

   FIG. 9 is an explanatory diagram of the fifth continuous reproduction scenario (panorama type multiple-viewpoint program).
[FIG. 10]

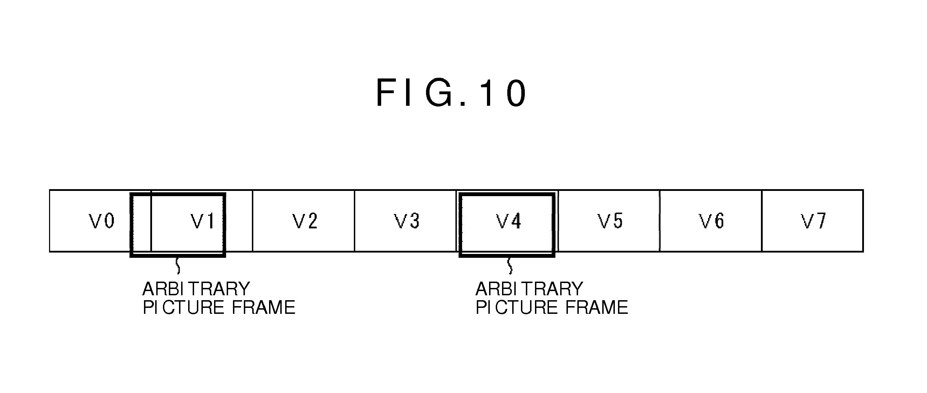

   FIG. 10 is an explanatory diagram of the fifth continuous reproduction scenario (panorama type multiple-viewpoint program).
[FIG. 11]

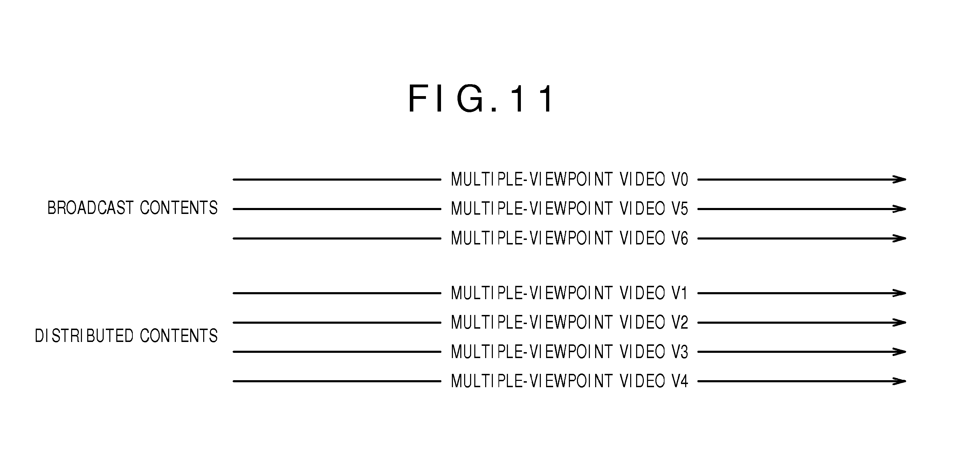

   FIG. 11 is an explanatory diagram of a sixth continuous reproduction scenario (theater type multiple-viewpoint program).
[FIG. 12]

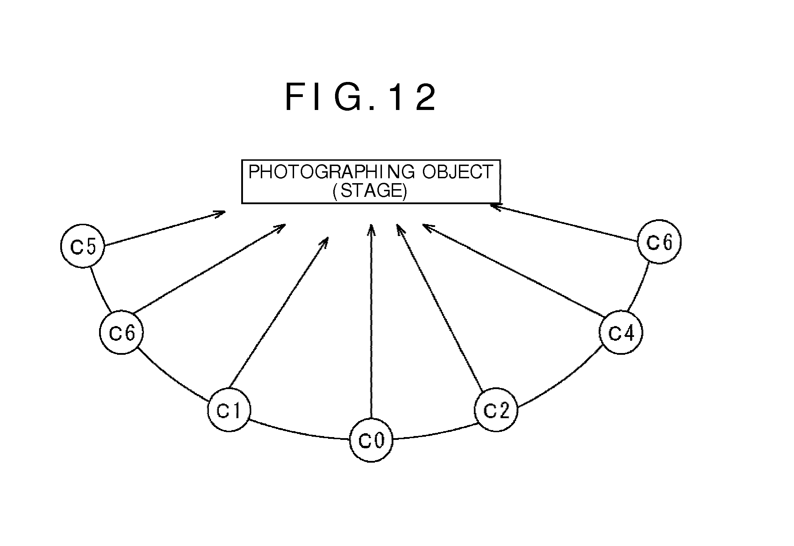

   FIG. 12 is an explanatory diagram of the sixth continuous reproduction scenario (theater type multiple-viewpoint program).
[FIG. 13]

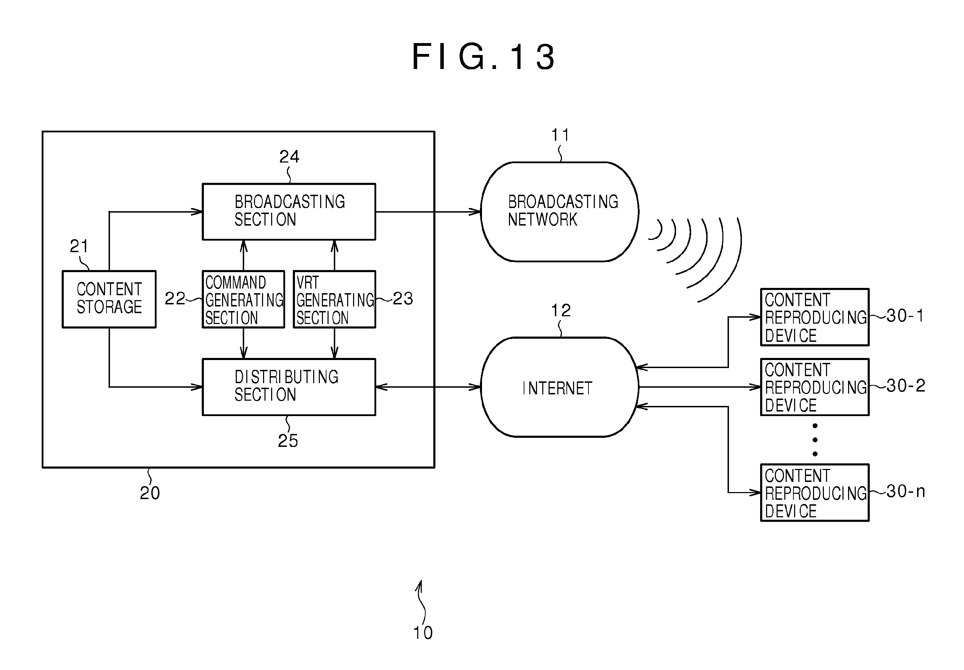

   FIG. 13 is a block diagram showing an example of configuration of a content viewing system to which the present disclosure is applied.
[FIG. 14]

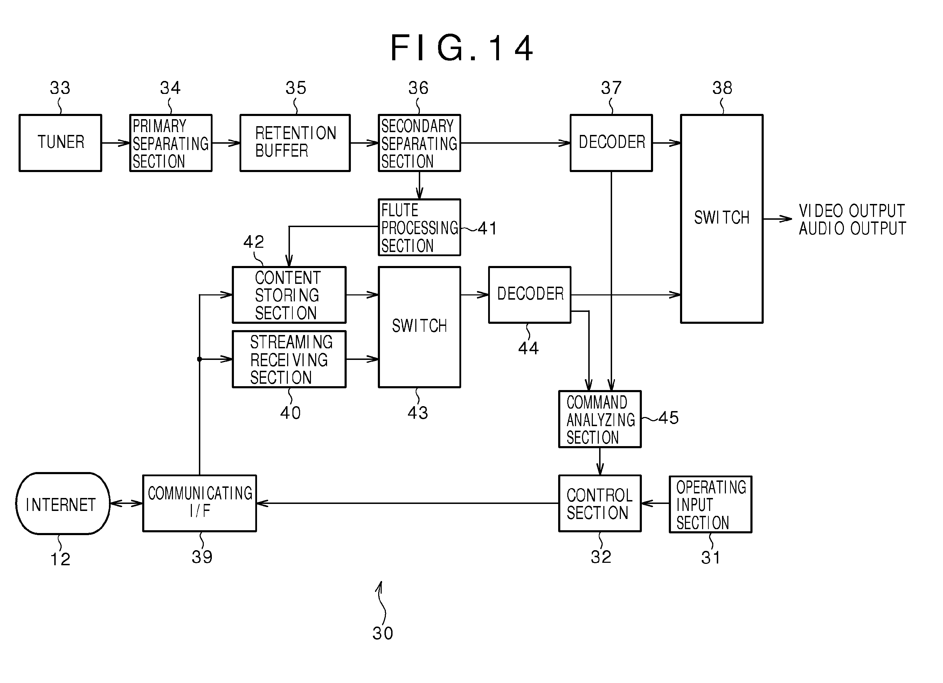

   FIG. 14 is a block diagram showing an example of configuration of a content reproducing device.
[FIG. 15]

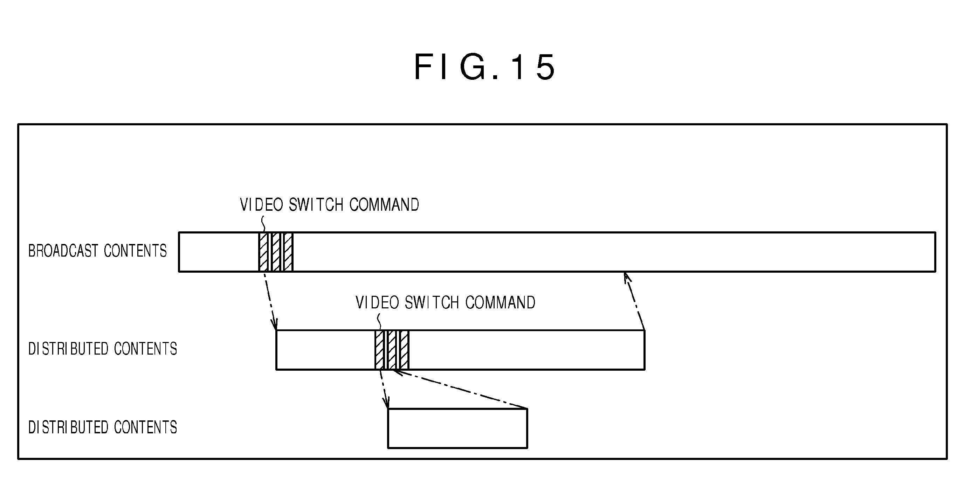

   FIG. 15 is an explanatory diagram of timing of transmission of video switch commands.
[FIG. 16]

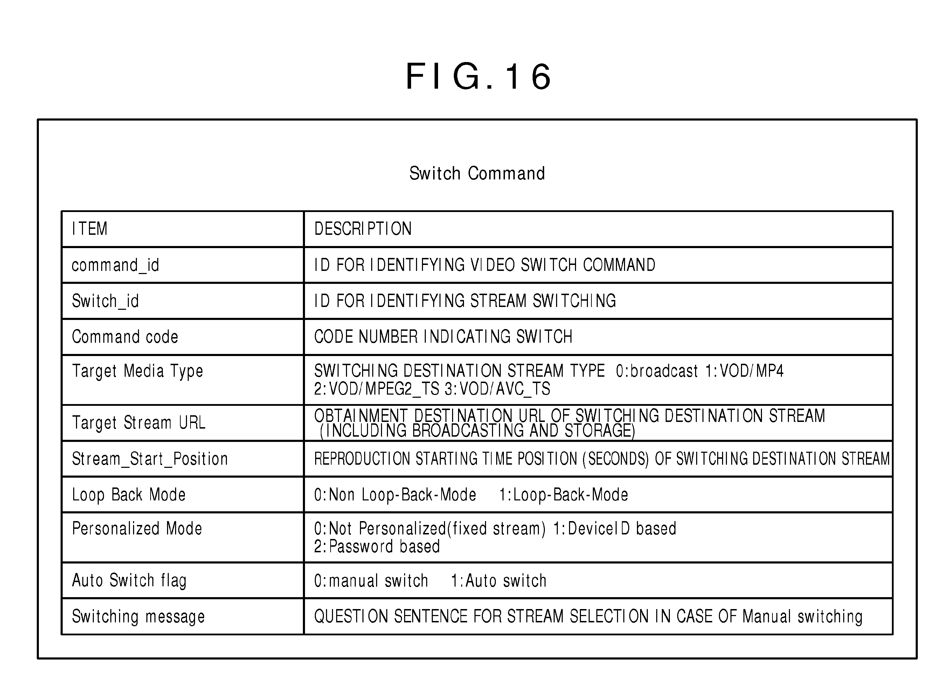

   FIG. 16 is a diagram showing elements of a switch command.
[FIG. 17]

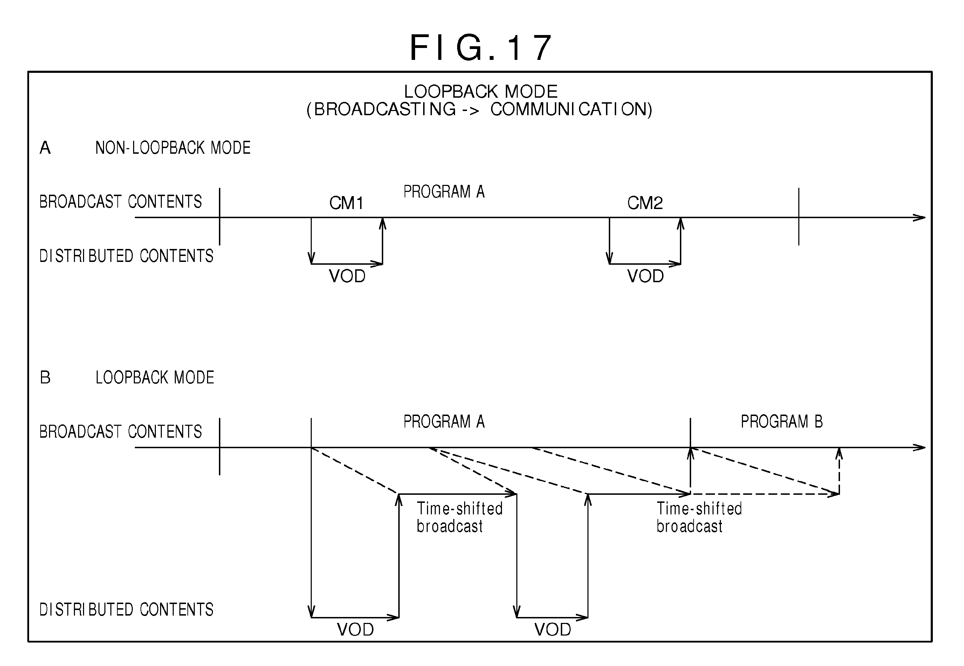

   FIG. 17 is a diagram of assistance in explaining a loopback mode.
[FIG. 18]

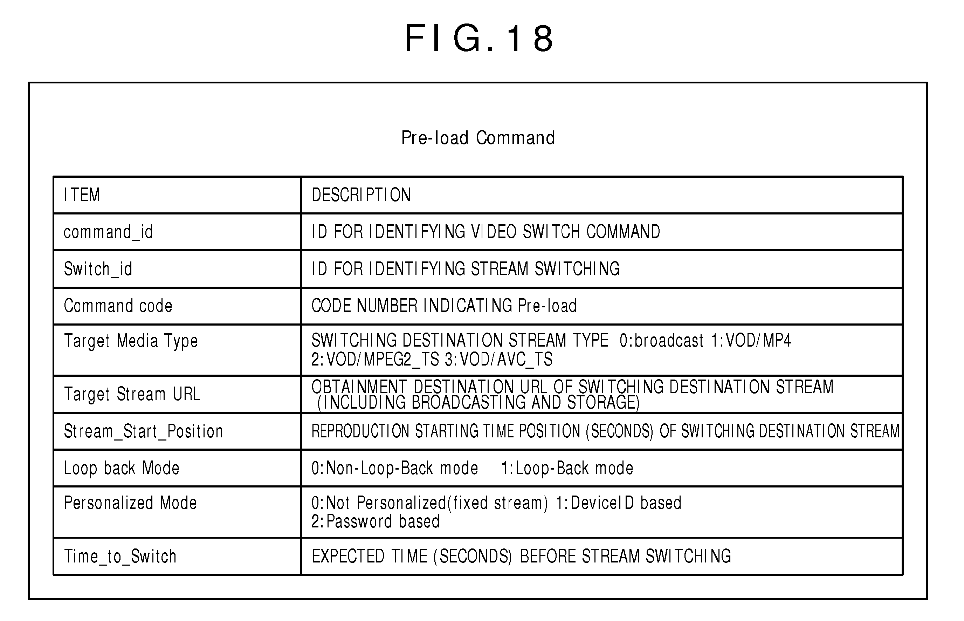

   FIG. 18 is a diagram showing elements of a pre-load command.
[FIG. 19]

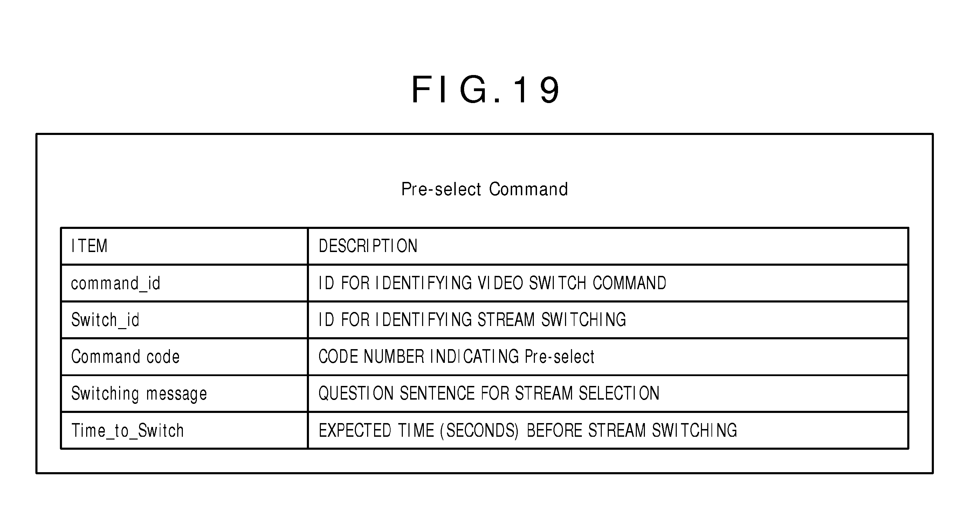

   FIG. 19 is a diagram showing elements of a pre-select command.
[FIG. 20]

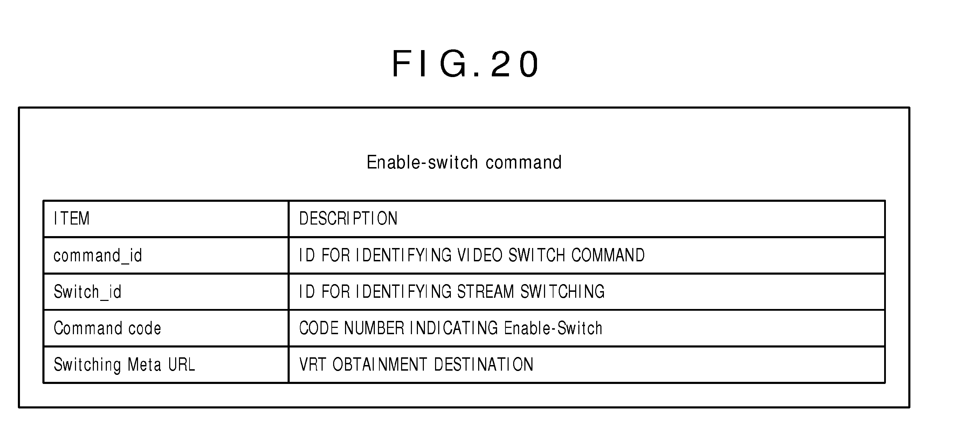

   FIG. 20 is a diagram showing elements of an enable switch command.
[FIG. 21]

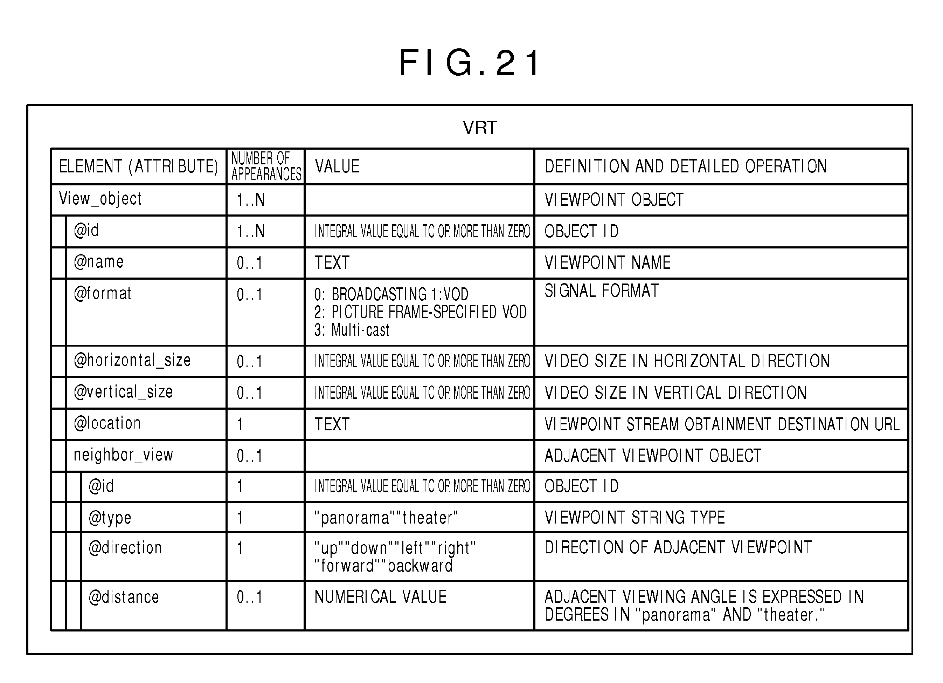

   FIG. 21 is a diagram showing elements of a VRT.
[FIG. 22]

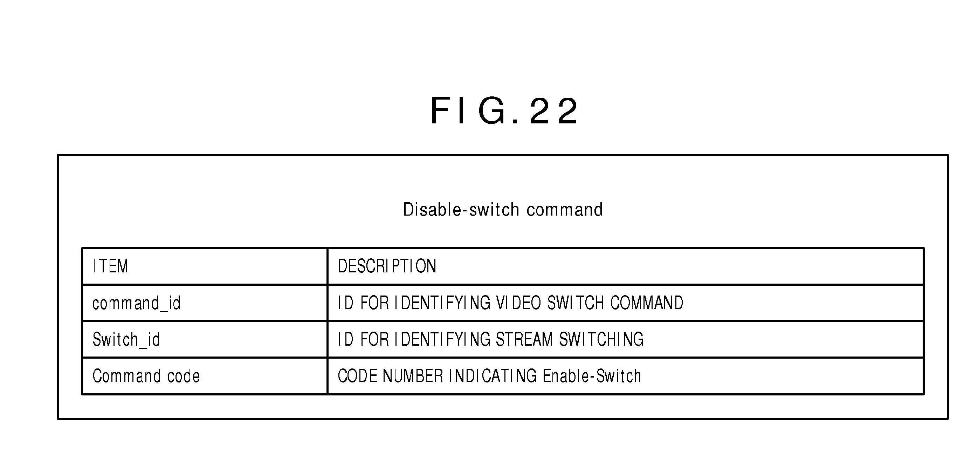

   FIG. 22 is a diagram showing elements of a disable switch command.
[FIG. 23]

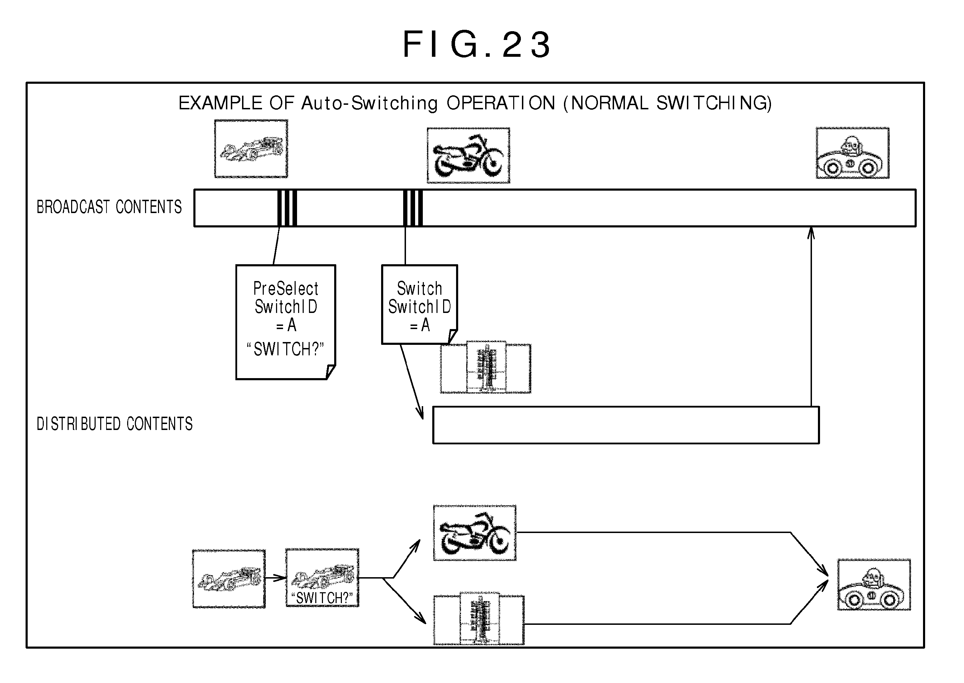

   FIG. 23 is an explanatory diagram of an example of use of a pre-select command in auto-switching operation.
[FIG. 24]

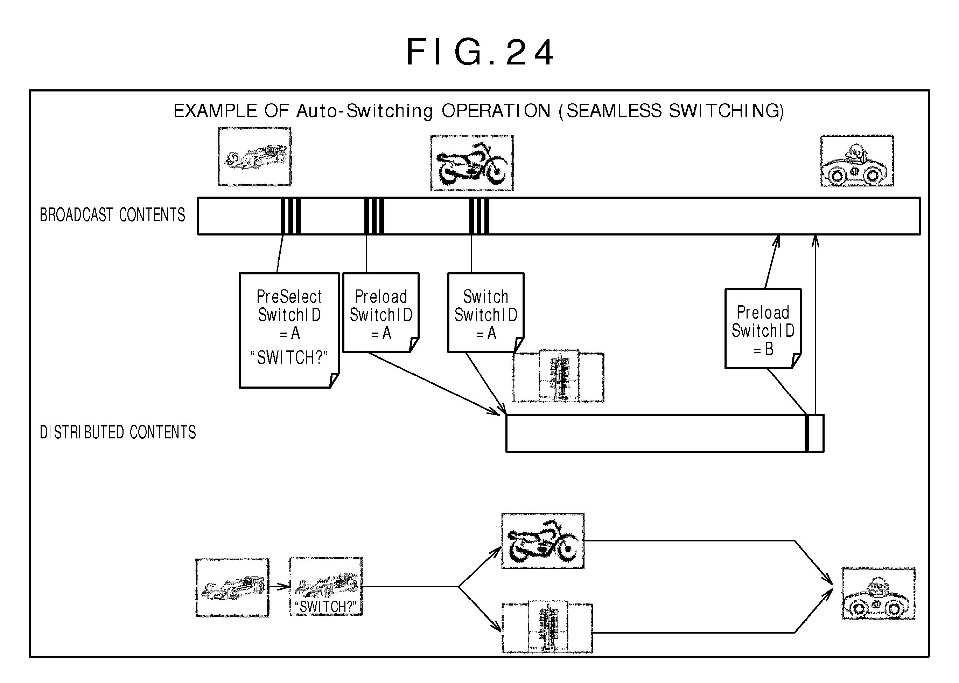

   FIG. 24 is an explanatory diagram of an example of use of a pre-select command and a pre-load command in auto-switching operation.
[FIG. 25]

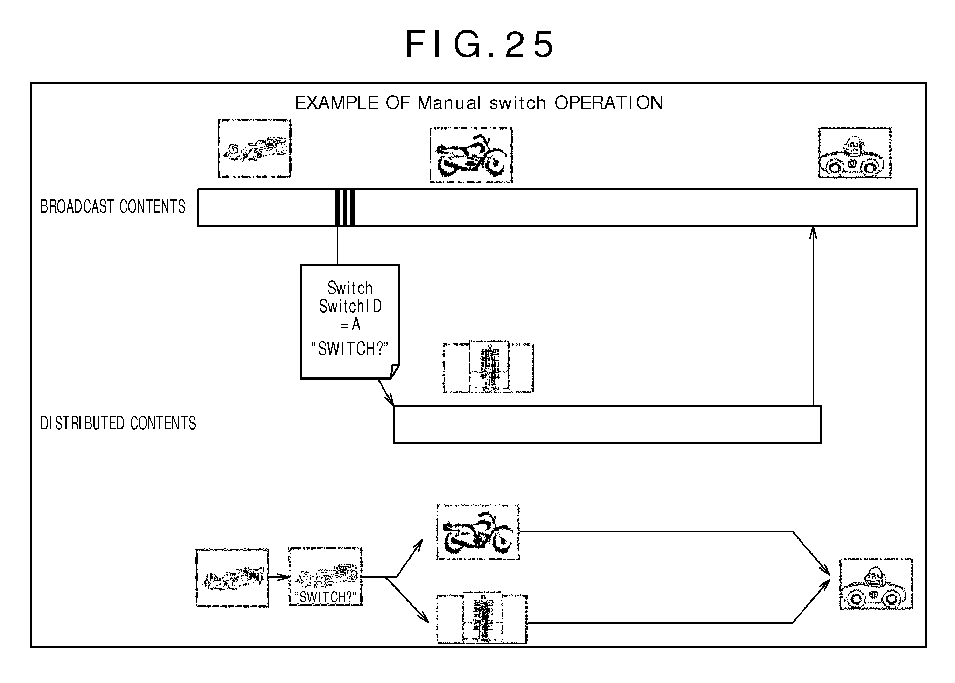

   FIG. 25 is an explanatory diagram of an example of use of a switch command in manual switching operation.
[FIG. 26]

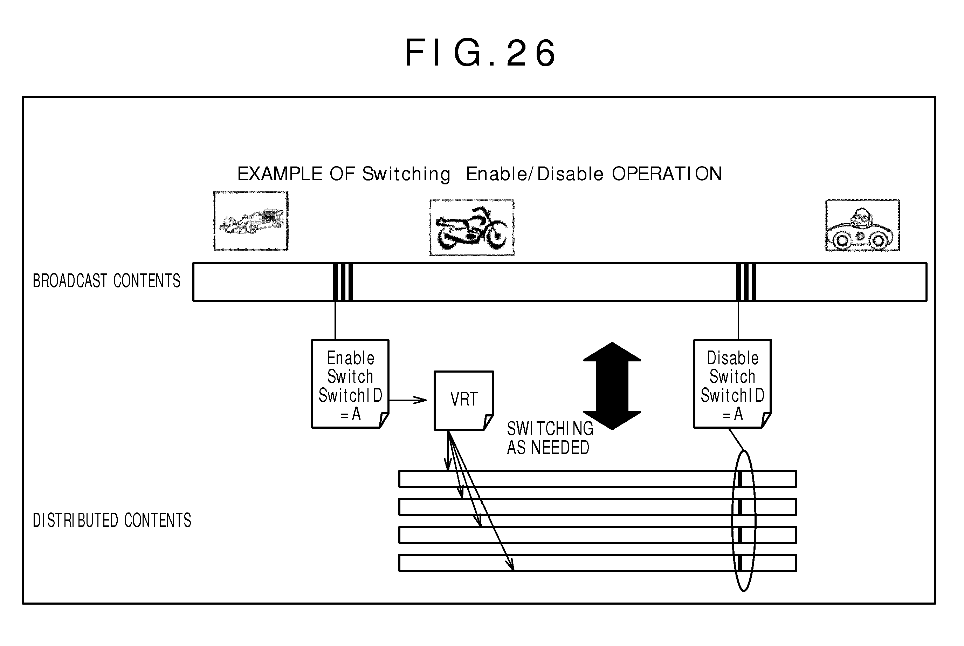

   FIG. 26 is an explanatory diagram of an example of use of switch commands in switching manual switching operation.
[FIG. 27]

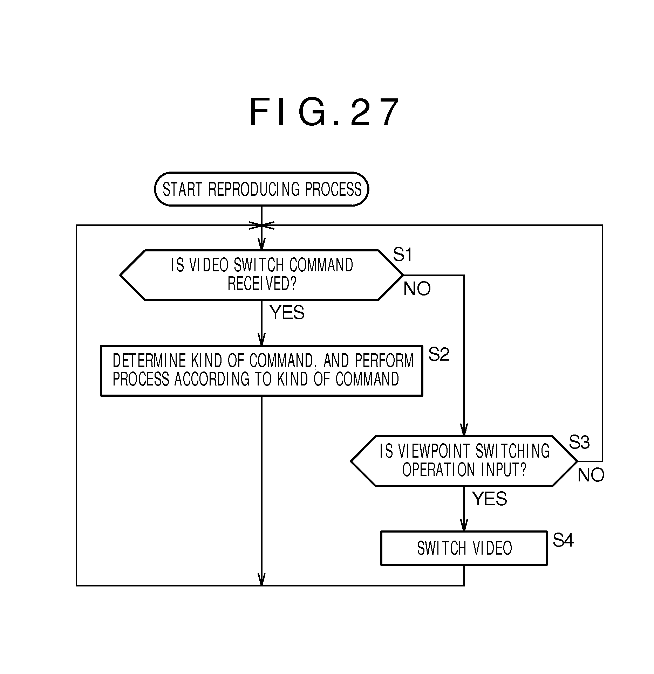

   FIG. 27 is a flowchart of assistance in explaining a reproducing process by the content reproducing device.
[FIG. 28]

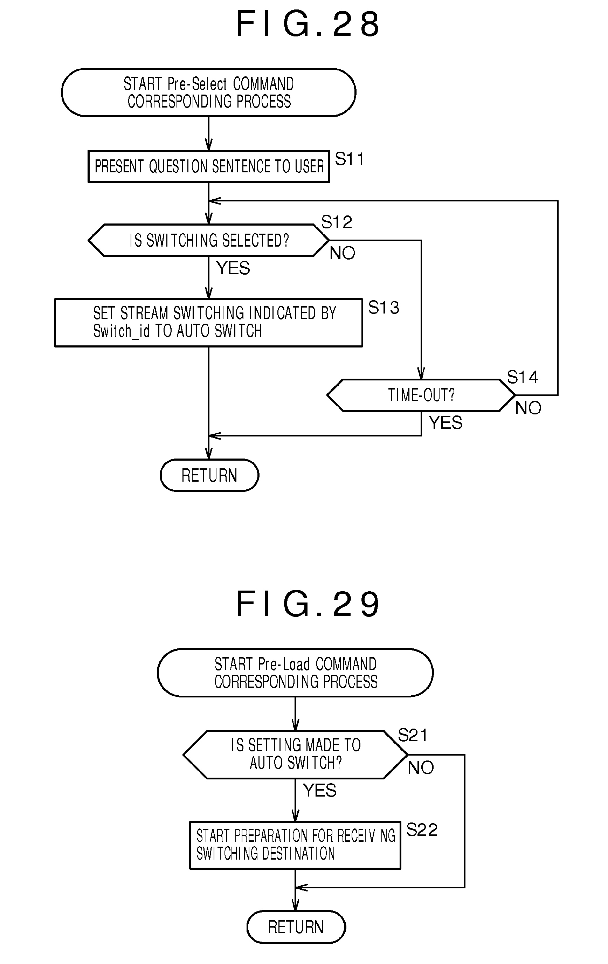

   FIG. 28 is a flowchart of assistance in explaining a pre-select command corresponding process.
[FIG. 29]
   FIG. 29 is a flowchart of assistance in explaining a pre-load command corresponding process.
[FIG. 30]

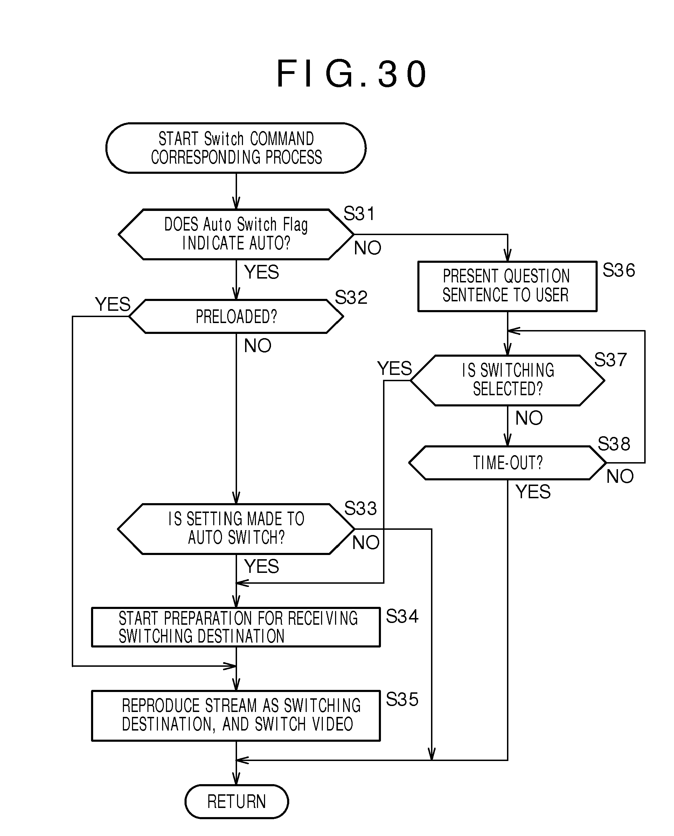

   FIG. 30 is a flowchart of assistance in explaining a switch command corresponding process.
[FIG. 31]

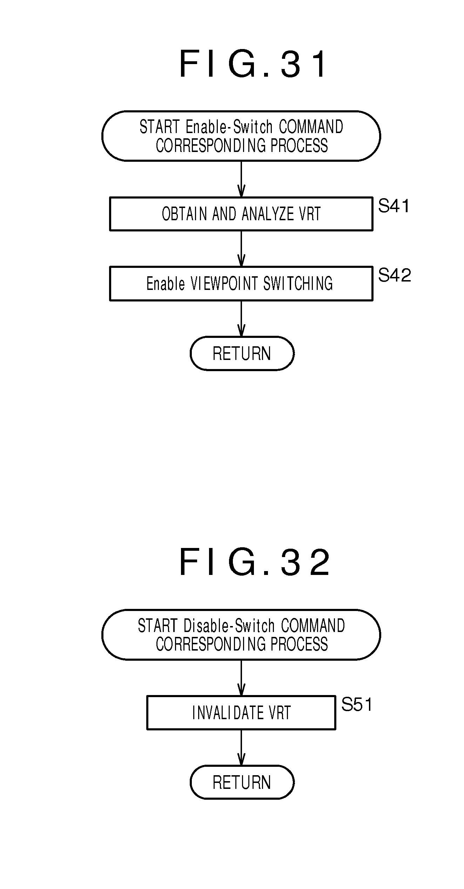

   FIG. 31 is a flowchart of assistance in explaining an enable switch command corresponding process.
[FIG. 32]
   FIG. 32 is a flowchart of assistance in explaining a disable switch command corresponding process.
[FIG. 33]

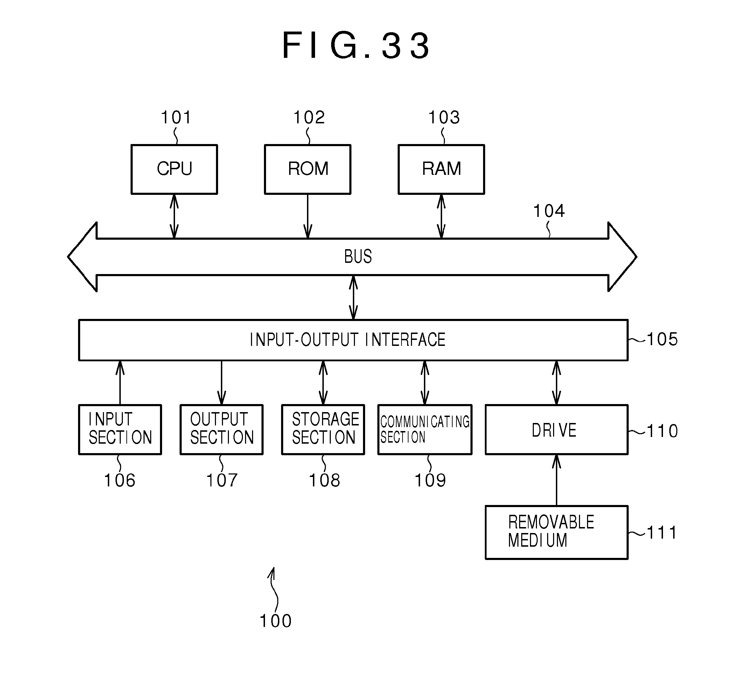

   FIG. 33 is a block diagram showing an example of configuration of a computer.

### [Description of Embodiments]

The best mode for carrying out the present disclosure (which best mode will hereinafter be referred to as embodiments) will hereinafter be described in detail with reference to the drawings.

Description will first be made of scenarios of continuous reproduction of broadcast contents and distributed contents related to each other, which scenarios are realized in a content viewing system as an embodiment of the present disclosure. Incidentally, two kinds of contents, that is, streaming contents distributed by streaming distribution and storage contents obtained by storing contents distributed prior to timing of reproduction of the contents on a receiving side are assumed as distributed contents supplied to the receiving side via the Internet. Incidentally, the video contents as the storage contents can also be downloaded via a broadcasting network prior to the timing of reproduction of the contents.

FIG. 1 is an explanatory diagram of a first continuous reproduction scenario (replacement of a broadcast commercial). In this scenario, when a commercial (CM) is started while a viewer is viewing a program A as broadcast contents, a specialized commercial specialized for the viewer, which commercial is provided by storage contents or streaming contents, is substituted for the broadcast commercial and reproduced. A local commercial according to the address of the viewer or a commercial according to the preferences of the viewer, for example, is assumed as the specialized commercial. Suppose that profile information such as the address, preferences, and the like of the viewer is registered in a receiving device in advance, and that the broadcast commercial is replaced with the specialized commercial only in the receiving device in which the profile information is registered.

FIG. 2 and FIG. 3 are diagrams of assistance in explaining a second continuous reproduction scenario (program of a variable time length). In this scenario, at the beginning of a program composed of a plurality of parts such as a news program, for example, as broadcast contents, a short version (S) provided by broadcast contents or a long version (L) provided by distributed contents can be chosen for each part, as shown in an example of screen display in FIG. 3. It is also possible to choose neither of the short version and the long version. The reproduction time of the program thereby becomes a variable length. Depending on the choice of the viewer, the ending time of the distributed contents can be later than the original ending time of the broadcast contents. In this case, there is a problem when a program (broadcast contents) following the broadcast contents in question is desired to be viewed. As a measure for this, it suffices to stop the reproduction of the distributed contents at the starting time of the next program (broadcast), or buffer the next program (broadcast contents). Incidentally, it suffices to reproduce the distributed contents to an end thereof when the program (broadcast contents) following the broadcast contents in question is not viewed.

FIG. 4 and FIG. 5 are diagrams of assistance in explaining a third continuous reproduction scenario (interactive program). In this scenario, at the beginning of a travel program as broadcast contents, an introduction is made up to a gateway to an old town in the form of a maze, which town is famous as a sightseeing spot, as shown in FIG. 5, for example. A free stroll time is set with the gateway as a breakup point. Pieces of video of walking on roads in the form of a maze and through structures as shown in FIG. 6 are prepared. The viewer is allowed to make choices at forks of roads or shops and thereby switch to individual branched pieces of video. Then, the viewer can receive and reproduce distributed contents corresponding to an infinite number of various strolling courses as free routes on the receiving side while sequentially selecting the distributed contents. Courses of not only simply passing various streets, markets, and the like but also entering shops are therefore assumed depending on the choices of the viewer. Further, shopping is made possible after user authentication within a shop by registering user information on the viewer in advance. In addition, a gathering point may be set in the various routes, so that a return (video switching) can be made to the broadcast contents only when the viewer can arrive at the gathering point in a predetermined time.

FIG. 6 and FIG. 7 illustrate a fourth continuous reproduction scenario (arbitrary picture frame-specified program). In this scenario, on a sports program such as a soccer relay broadcast or the like as broadcast contents, photographing is performed by a few high-definition (4K2K or more) video cameras disposed at such positions as to overlook an entire field where soccer is being played, and a plurality of pieces of video obtained as a result of the photographing are supplied to the receiving side as broadcast contents or streaming contents. On the receiving side, the viewer sets a picture frame of an arbitrary size at an arbitrary position (which picture frame will hereinafter be referred to as an arbitrary picture frame), and the specified arbitrary picture frame is cut out and displayed from the received broadcast contents or the received streaming contents. Incidentally, when the arbitrary picture frame straddles the picture frame 1 of the broadcast contents and the picture frame 2 of the streaming contents, as shown in FIG. 7, it suffices to receive and reproduce both contents simultaneously, couple resulting video signals to each other, and then extract the arbitrary picture frame.

In addition, the arbitrary picture frame specified by the viewer may be notified to a transmitting side, so that the video corresponding to the arbitrary picture frame is cut out on the transmitting side, and distributed by streaming distribution.

FIGS. 8 to 10 illustrate a fifth continuous reproduction scenario (panorama type multiple-viewpoint program). In this scenario, as shown in FIG. 9, the entire 360 degrees periphery of a camera is imaged simultaneously with the camera as a center. Of a plurality of viewpoint images V0 to V7 obtained as a result of the imaging, the viewpoint image V0 as an entry or the like is broadcast contents, and the other viewpoint images are streaming contents. Incidentally, it is not necessarily required that the entire 360 degrees periphery be photographed, but a part of the entire periphery also suffices.

On the receiving side, the viewer sets a picture frame in an arbitrary direction (which picture frame will hereinafter be referred to as an arbitrary picture frame), and the specified arbitrary picture frame is cut out and displayed from the received broadcast contents or the received streaming contents. Incidentally, when the arbitrary picture frame straddles the picture frame 1 of the broadcast contents and the picture frame 2 of the streaming contents, as shown in FIG. 10, it suffices to receive and reproduce both contents simultaneously, couple resulting video signals to each other, and then extract the arbitrary picture frame.

FIG. 11 and FIG. 12 illustrate a sixth continuous reproduction scenario (theater type multiple-viewpoint program). In this scenario, as shown in FIG. 12, simultaneous imaging is performed with a plurality of video cameras C0 to C6 disposed concentrically with a stage, which is an object of photographing, as a center. Of a plurality of viewpoint images V0 to V6 obtained as a result of the imaging, the viewpoint image V0 as an entry or the like is broadcast contents, and the other viewpoint images are streaming contents.

On the receiving side, the viewer specifies an arbitrary viewpoint (camera position), and the viewpoint image corresponding to the specified arbitrary viewpoint is received, reproduced, and displayed from the broadcast contents or the streaming contents. Incidentally, when the specified viewpoint differs from an actual camera position, it suffices to receive and reproduce viewpoint images corresponding to two actual camera positions, respectively, sandwiching the specified viewpoint, and generate video corresponding to the specified viewpoint by interpolation processing using these viewpoint images.

### [Example of Configuration of Content Viewing System]

Description will next be made of an example of configuration of the content viewing system as an embodiment of the present disclosure, which content viewing system realizes the first to sixth continuous reproduction scenarios described above.

FIG. 13 shows an example of configuration of the content viewing system.

This content viewing system 10 includes a content content transmitting device 20 and content reproducing devices 30-1 to 30-n. When the content reproducing devices 30-1 to 30-n do not need to be individually distinguished from each other, the content reproducing devices 30-1 to 30-n will hereinafter be referred to simply as a content reproducing device 30.

Incidentally, the content reproducing device 30 may be present as a separate unit, or may be incorporated in a television receiver, a video recorder, or the like.

The content transmitting device 20 includes a content storage 21, a command generating section 22, a VRT generating section 23, a broadcasting section 24, and a distributing section 25.

The content storage 21 retains video contents to be broadcast or distributed. Incidentally, the video contents are composed of a video stream and an audio stream.

The command generating section 22 generates a video switch command for making the content receiving device 30 perform a process related to video switching, and outputs the video switch command to the broadcasting section 24 or the distributing section 25. The generated video switch command is embedded and broadcast in the video stream or the audio stream of broadcast contents, or embedded and distributed in the video stream or the audio stream of streaming contents.

The VRT generating section 23 generates a VRT (View Relation Table) referred to when video is switched in the content receiving device 30, and outputs the VRT to the broadcasting section 24 or the distributing section 25.

The VRT includes information such as the viewpoint string type of each of a plurality of multiple viewpoint images forming video contents, an obtainment destination URL (URL of Broadcast Stream or Internet Stream), and the like. Incidentally, details of the VRT will be described later with reference to FIG. 21.

The broadcasting section 24 reads contents to be broadcast as broadcast contents from the video contents retained by the content storage 21, and broadcasts the contents as a program of television broadcasting via a broadcasting network 11. In addition, the broadcasting section 24 embeds and broadcasts the generated video switch command in the video stream or the audio stream of the broadcast contents.

In addition, the broadcasting section 24 stores and broadcasts the generated VRT in a predetermined position of a broadcast signal. In addition, the broadcasting section 24 stores and broadcasts the generated VRT in a predetermined position of a broadcast signal. Further, the broadcasting section 24 can read contents to be broadcast as storage contents from the video contents retained by the content storage 21, and broadcast the contents via the broadcasting network 11.

The distributing section 25 reads contents to be distributed as streaming contents or storage contents from the video contents retained by the content storage 21, and distributes the contents to the content receiving device 30 via the Internet 12. In addition, in response to a request from the content reproducing device 30, the distributing section 25 supplies the generated VRT to the content reproducing device 30 as a source of the supplied request via the Internet 12.

Next, FIG. 14 shows an example of configuration of the content reproducing device 30. The content reproducing device 30 includes an operating input section 31, a control section 32, a tuner 33, a primary separating section 34, a retention buffer 35, a secondary separating section 36, a decoder 37, and a switch 38. The content reproducing device 30 further includes a communicating I/F 39, a streaming receiving section 40, a content storing section 42, a FLUTE processing section 41, a switch 43, a decoder 44, and a command analyzing section 45.

The operating input section 31 includes for example a remote control and a receiving section for the remote control (neither of the remote control and the receiving section is shown). The operating input section 31 receives a user operation, and notifies the user operation to the control section 32.

The control section 32 controls various parts of the content reproducing device 30 on the basis of the user operation input from the operating input section 31 and a result of analysis of a received video switch command, which result is input from the command analyzing section 45. Incidentally, control lines connecting the control section 32 to the various parts are not shown where appropriate.

The tuner 33 receives a television broadcast signal broadcast via the broadcasting network 11, and outputs the television broadcast signal to the primary separating section 34. The primary separating section 34 separates a broadcast content TS (Transport Stream) corresponding to a channel selection from the control section 32, and outputs the broadcast content TS to the retention buffer 35. Under control of the control section 32, at a time of a loopback mode when switching has been made from the broadcast signal to a streaming signal or the like, the retention buffer 35 writes the broadcast content TS, but does not read and output the broadcast content TS to the secondary separating section 36. At other times, the retention buffer 35 simultaneously writes and reads the TS from the preceding stage, and outputs the TS to the secondary separating section 36.

The secondary separating section 36 separates the input broadcast content TS into a video stream and an audio stream, and outputs the video stream and the audio stream to the decoder 37. In addition, the secondary separating section 36 outputs the TS including storage contents to the FLUTE processing section 41.

The decoder 37 decodes the input video stream and the input audio stream, and outputs a video signal and an audio signal obtained as a result of the decoding to the switch 38. In addition, the decoder 37 extracts a video switch command embedded in the input video stream or the input audio stream, and outputs the video switch command to the command analyzing section 45.

Under control of the control section 32, the switch 38 outputs the input (the video signal and the audio signal) from the decoder 37 or input from the decoder 44 to a monitor (not shown) in a subsequent stage. In addition, under control of the control section 32, the switch 38 generates a video signal and an audio signal corresponding to an arbitrary picture frame or an arbitrary viewpoint by coupling and cutting out the input (the video signal and the audio signal) from the decoder 37 and the input from the decoder 44 or performing interpolation, and outputs the video signal and the audio signal to the subsequent stage.

The communicating I/F 39 makes connection to the content transmitting device 20 via the Internet 12. The streaming receiving section 40 obtains streaming contents from the content transmitting device 20 via the communicating I/F 39 and the Internet 12, and outputs the streaming contents to the switch 43.

The FLUTE processing section 41 extracts the storage contents from the TS input from the secondary separating section 36, and outputs the TS to the content storing section 42. The content storing section 42 retains the broadcast storage contents input from the FLUTE processing section 41. The content storing section 42 also obtains and retains storage contents from the content transmitting device 20 via the communicating I/F 39 and the Internet 12. The content storing section 42 further outputs the retained storage contents to the switch 43 under control of the control section 32.

Under control of the control section 32, the switch 43 outputs the streaming contents from the streaming receiving section 40 or the storage contents input from the content storing section 42 to the decoder 44.

The decoder 44 decodes the streaming contents or the storage contents input from the switch 43, and outputs a video signal and an audio signal obtained as a result of the decoding to the switch 38. In addition, the decoder 44 extracts a video switch command embedded in the input video stream or the input audio stream, and outputs the video switch command to the command analyzing section 45.

The command analyzing section 45 analyzes the input video switch command, and outputs a result of the analysis to the control section 32.

### [Timing of Transmission of Video Switch Command]

FIG. 15 shows timing of transmission of video switch commands. As shown in the figure, an identical video switch command is consecutively embedded and broadcast in a video stream or an audio stream a plurality of times in order to suppress a reception error in the content receiving device 30.

The content receiving device 30 switches video immediately in response to the video switch command embedded directly in the video stream or the audio stream. Therefore, video switching can be performed very smoothly as compared with for example a case where a predetermined application program operatively associated with the video stream is started and video is switched as an operation of the application program.

### [Kinds of Video Switch Commands]

Description will next be made of five kinds of video switch commands. A video switch command is classified as one of a switch command, a pre-load command, a pre-select command, an enable switch command, and a disable switch command.

FIG. 16 shows elements forming a video switch command as a switch command. The switch command controls the content receiving device 30 to switch video, that is, change video contents being received and decoded.

command_id is identifying information identifying the video switch command. When the same video switch command is consecutively transmitted a plurality of times, this command_id is the same. Switch_id is identifying information given to each event of switching video. Command code is a code number indicating that the video switch command is a switch command.

Target Media Type indicates whether the video stream as a switching destination is broadcast contents, distributed contents in an MP4 format, a distributed format in an MPEG2_TS format, or distributed contents in an AVC_TS format. Target Stream URL represents the obtainment destination URL of the video contents as the switching destination. Stream_Start_Position represents the reproduction starting time position of the video contents as the switching destination.

Loop Back Mode designates a non-loopback mode or a loopback mode. The loopback mode represents a case where reproduction is resumed from a scene from which switching was performed in the video as a switching source after the video switching was performed and then the reproduction of the video as the switching destination is ended. The non-loopback mode represents a case of switching other than that in the loopback mode.

When streaming or storage contents are a switching source, it suffices only to store a switching position in the loopback mode. However, when a broadcast signal is a switching source, consideration is necessary. The non-loopback mode and the loopback mode in a case where a broadcast signal is a switching source will be described in the following with reference to FIG. 17. FIG. 17A illustrates the non-loopback mode. FIG. 17B illustrates the loopback mode. As is clear from the figures, in the case of the non-loopback mode, when video switching is performed, the video as the switching source (program A in the case of FIG. 17A) proceeds as it is even in a period in which the video is switched, that is, the video as the switching source is replaced with the video of the switching destination.

On the other hand, in the case of the loopback mode, when video switching is performed, the video as the switching source (program A in the case of FIG. 17A) is written to the retention buffer 35 but is not read nor output to the secondary separating section 36 in a period in which the video is switched. When a return is made to the video as the switching source and reproduction is resumed, the reproduction is performed from the video immediately after the switching, which video is stored in the retention buffer. The viewer therefore views a state of the video as the switching destination being inserted in the video as the switching source.

Description is returned to FIG. 16. Personalized Mode indicates whether or not to perform user authentication at a time of obtaining distributed contents and whether or not to use the device ID of the content receiving device 30 or request the user to input a password at the time of the user authentication. Incidentally, when user authentication is performed, the device ID of the content receiving device 30 or the password needs to be registered in the content transmitting device 20 in advance. The content transmitting device 20 supplies a distribution stream specialized for the user according to a result of the user authentication. Auto Switch flag indicates whether to inquire of the user before video switching. Switching message is a question sentence presented to the user when inquiring of the user before video switching.

FIG. 18 shows elements forming a video switch command as a pre-load command. The pre-load command controls the content receiving device 30 to receive the video contents as the switching destination prior to timing of video switching.

command_id is identifying information identifying the video switch command. Switch_id is identifying information given to each event of switching video. Command code is a code number indicating that the video switch command is a pre-load command.

Target Media Type indicates whether the video stream as the switching destination is broadcast contents, distributed contents in the MP4 format, a distributed format in the MPEG2_TS format, or distributed contents in the AVC_TS format. Target Stream URL represents the obtainment destination URL of the video contents as the switching destination. Stream_Start_Position represents the reproduction starting time position of the video contents as the switching destination.

Loop Back Mode designates the non-loopback mode or the loopback mode.

Personalized Mode indicates whether or not to perform user authentication at a time of obtaining distributed contents and whether or not to use the device ID of the content receiving device 30 or use a password at the time of the user authentication. Auto Switch flag indicates whether to inquire of the user before video switching. Time_to_switch indicates an expected time before switching is performed to the video of the video contents obtained according to the pre-load command.

FIG. 19 shows elements forming a video switch command as a pre-select command. The pre-select command controls the content receiving device 30 to inquire of the user as to whether or not to perform video switching prior to timing of the video switching.

command_id is identifying information identifying the video switch command. Switch_id is identifying information given to each event of switching video. Command code is a code number indicating that the video switch command is a pre-select command.

Switching message is a question sentence presented to the user when inquiring of the user before the video switching. Time_to_switch indicates an expected time before the switching is performed to the video of the video contents selected according to the pre-select command.

FIG. 20 shows elements forming a video switch command as an enable switch command. The enable switch command controls the content receiving device 30 to obtain a VRT so as to enable viewpoint switching in a panorama type multiple-viewpoint video program or a theater type multiple-viewpoint video program.

The id attribute of the neighbor_view element is identifying information identifying the viewpoint video (hereinafter referred to as adjacent viewpoint video) taken at the camera position adjacent to the camera position where the viewpoint video corresponding to the View_object element was taken.
command_id is identifying information identifying the video switch command. Switch_id is identifying information given to each event of switching video. Command code is a code number indicating that the video switch command is an enable switch command. Switching Meta URL represents the obtainment destination URL of the VRT.

Description in the following will be made of a VRT. FIG. 21 shows an example of elements forming a VRT.

A View_object element is information on each piece of viewpoint video forming a panorama type multiple-viewpoint program or a theater type multiple-viewpoint program, and is described a number of times corresponding to the number of pieces of viewpoint video. The View_object element has six attributes, that is, an id attribute, a name attribute, a format attribute, a horizontal_size attribute, a vertical_size attribute, and a location attribute.

The id attribute of the View_object element is identifying information for the viewpoint video in question. The name attribute describes a name given to the multiple-viewpoint video in question. The format attribute indicates the coding format of the multiple-viewpoint video in question. The horizontal_size attribute indicates the size in a horizontal direction of the multiple-viewpoint video in question. The vertical_size attribute indicates the size in a vertical direction of the multiple-viewpoint video in question. The location attribute indicates the obtainment destination URL of the viewpoint video in question.

Further, in the View_object element, a neighbor_view element indicating information on multiple-viewpoint video taken at a camera position adjacent to a camera position where the multiple-viewpoint video in question was taken is described as a child element. The neighbor_view element has four attributes, that is, an id attribute, a type attribute, a direction attribute, and a distance attribute. The type attribute indicates a viewpoint string type (a panorama type or a theater type) representing relation between the viewpoint video specified by the View_object element and the adjacent viewpoint video. The direction attribute describes the direction of the camera position where the adjacent viewpoint video was taken with respect to the camera position where the viewpoint video corresponding to the View_object element was taken. The distance attribute indicates the viewing angle of the camera position where the adjacent viewpoint video was taken with respect to the camera position where the viewpoint video corresponding to the View_object was taken.

FIG. 22 shows elements forming a video switch command as a disable switch command. The disable switch command controls the content receiving device 30 to invalidate an obtained VRT so as to disable viewpoint switching in a panorama type multiple-viewpoint video program or a theater type multiple-viewpoint video program.

command_id is identifying information identifying the video switch command. Switch_id is identifying information given to each event of switching video. Command code is a code number indicating that the video switch command is a disable switch command.

### [Description of Operation]

Description will next be made of examples of four kinds of use of the video switch commands described above. Incidentally, the examples of these four kinds of use can be adopted in the first to fifth continuous reproduction scenarios described above as appropriate.

FIG. 23 shows an example of use of a pre-select command in auto-switching operation.

When switching is performed from the video of broadcast contents to the video of distributed contents, a pre-select command is transmitted prior to timing of the switching, and a switch command is transmitted in the timing of the switching.

On the receiving side, the viewer (user of the content reproducing device 30) is made to select whether or not to perform video switching in response to the pre-select command. In this case, when the viewer makes a selection to perform video switching, auto-switching is set to the event of the video switching indicated by the Switch_id of the pre-select command. On the contrary, when the viewer makes a selection not to perform the video switching, no switching is set to the event of the video switching indicated by the Switch_id of the pre-select command. When the switch command is thereafter received, the video switching is automatically performed in the case where the auto-switching is set in response to the earlier pre-select command, and the video switching is not performed in the case where no switching is set.

When the video switching is performed, whether or not to perform a loopback after the video as the switching destination is ended is determined according to the Loop Back Mode of the switch command.

However, in the case of FIG. 23, the distributed contents as the switching destination are obtained in response to the switch command, so that the video may not be switched seamlessly. Accordingly, description will be made of a method enabling seamless switching of video.

FIG. 24 shows an example of use of a pre-select command and a pre-load command in auto-switching operation.

When switching is performed from the video of broadcast contents to the video of distributed contents, a pre-select command and a pre-load command are transmitted prior to timing of the switching, and a switch command is transmitted in the timing of the switching.

On the receiving side, the viewer (user of the content reproducing device 30) is made to select whether or not to perform video switching in response to the pre-select command. In this case, when the viewer makes a selection to perform video switching, auto-switching is set to the event of the video switching indicated by the Switch_id of the pre-select command. Then, the obtainment of the distributed contents as the switching destination is started according to the pre-load command. When the switch command is thereafter received, the video switching is smoothly performed in the case where the auto-switching is set in response to the earlier pre-select command.

When the video switching is performed, whether or not to perform a loopback after the video as the switching destination is ended is determined according to the Loop Back Mode of the switch command.

In the case of FIG. 24, the distributed contents as the switching destination are obtained according to the pre-load command, so that the video can be switched seamlessly.

FIG. 25 shows an example of use of a switch command in manual switching operation.

When switching is performed from the video of broadcast contents to the video of distributed contents, a switch command is transmitted in timing of the switching.

On the receiving side, when the Auto Switch flag of the switch command is set to a manual switch, a message is displayed for the viewer (user of the content reproducing device 30) to make the viewer select whether or not to perform video switching. In this case, when the viewer makes a selection to perform the video switching, the obtainment of distributed contents as a switching destination is started, and the video switching is performed. Incidentally, in a case where the Loop Back Mode of the switch command is set to the loopback mode, broadcast contents as a switching source are buffered, and display is set in a pause state, during a wait for a selection operating input from the user. In a case where the Loop Back Mode of the switch command is set to the non-loopback mode, the broadcast contents as the switching source are passed through, and the video of the broadcast contents continues being displayed, during the wait for a selection operating input from the user.

FIG. 26 shows an example of use of an enable switch command and a disable switch command in viewpoint switching operation.

In realizing a panorama type multiple-viewpoint program or a theater type multiple-viewpoint program, an enable switch command is transmitted, thereby making a VRT obtained on the receiving side. When the VRT is obtained on the receiving side, the viewer is notified that viewpoints can be specified arbitrarily. When the viewer arbitrarily specifies a viewpoint, multiple-viewpoint video corresponding to the specified viewpoint is received and reproduced. When the arbitrary specification of the viewpoint is to be ended, a disable switch command is transmitted. On the receiving side, the obtained VRT is invalidated according to the disable switch command.

### [Reproducing Process by Content Reproducing Device 30]

Next, FIG. 27 is a flowchart of assistance in explaining a reproducing process by the content reproducing device 30.

Suppose as a precondition that the content reproducing device 30 has already received broadcast contents as a program broadcast via the broadcasting network 11.

In step S1, the command analyzing section 45 determines whether a video switch command is received on the basis of the presence or absence of input from the decoder 37. When it is determined that a video switch command is received, the process is advanced to step S2. In step S2, the command analyzing section 45 analyzes the video switch command input from the decoder 37, and performs a process according to a command type indicated by the Command_code of the video switch command.

Incidentally, when it is determined in step S1 that no video switch command is received, the process is advanced to step S3. In step S3, the control section 32 determines whether a viewpoint switching operation is input from the user. When it is determined that no viewpoint switching operation is input from the user, the process is returned to step S1. Incidentally, a viewpoint switching operation can be input from the user only when viewpoint switching is enabled by an enable switch corresponding process to be described later. When it is determined in step S3 that a viewpoint switching operation is input from the user, the process is advanced to step S4. In step S4, the control section 32 controls various related parts to receive and reproduce distributed contents corresponding to a specified viewpoint, and to switch video.

FIG. 28 is a flowchart of assistance in explaining a process in a case where the received video switch command is a pre-select command (pre-select command corresponding process).

In step S11, the control section 32 presents a question sentence described in the Switching message of the pre-select command to the user to make the user select whether or not to switch video. In step S12, the control section 32 determines whether switching is selected. When video switching is selected, the process is advanced to step S13. In step S13, the control section 32 sets the video switching indicated by Switch_id to an auto switch.

Incidentally, when the video switching is not selected in step S12, or when a selection time has become a time-out period (which is determined on the basis of Time_to_Switch), the pre-select command corresponding process is ended.

FIG. 29 is a flowchart of assistance in explaining a process in a case where the received video switch command is a pre-load command (pre-load command corresponding process).

In step S21, the control section 32 determines whether video switching indicated by Switch_id has been set to an auto switch in response to a pre-select command transmitted prior to the pre-load command. When it is determined that the video switching indicated by Switch_id is set to an auto switch, the process is advanced to step S22. In step S22, the control section 32 controls various related parts to start preparation for receiving distributed contents as a switching destination.

Incidentally, when it is determined in step S21 that the video switching indicated by Switch_id is not set to an auto switch, the pre-load command corresponding process is ended.

FIG. 30 is a flowchart of assistance in explaining a process in a case where the received video switch command is a switch command (switch command corresponding process).

In step S31, the command analyzing section 45 determines whether the Auto Switch flag of the switch command indicates an auto switch (or a manual switch). When it is determined that the Auto Switch flag of the switch command indicates an auto switch, the process is advanced to step S32. In step S32, the command analyzing section 45 determines whether distributed contents as a switching destination have been preloaded. When it is determined that the distributed contents as the switching destination have not been preloaded, the process is advanced to step S33.

In step S33, whether video switching indicated by Switch_id has been set to an auto switch in response to a pre-select command transmitted prior to the switch command is determined. When it is determined that the video switching indicated by Switch_id is set to an auto switch, the process is advanced to step S34. In step S34, the command analyzing section 45 notifies a result of analysis thus far of the switch command to the control section 32. According to this notification, the control section 32 controls various related parts to start preparation for receiving the distributed contents as the switching destination.

In step S35, the control section 32 controls various related parts to switch video to the distributed contents as the switching destination.

Incidentally, when it is determined in step S32 that the distributed contents as the switching destination have been preloaded, the process of steps S33 and S34 is skipped. In addition, when it is determined in step S33 that the video switching indicated by Switch_id has not been set to an auto switch in response to the pre-select command transmitted prior to the switch command, steps S34 and S35 are skipped, and the switch command corresponding process is ended without the video switching being performed.

When it is determined in step S31 that the Auto Switch flag of the switch command does not indicate an auto switch (indicates a manual switch), the process is advanced to step S36. In step S36, the command analyzing section 45 notifies a result of analysis thus far of the switch command to the control section 32. According to this notification, the control section 32 presents a question sentence described in the Switching message of the switch command to the user to make the user select whether to switch video, and determines whether the switching is selected in step S37. When the video switching is selected, the process is advanced to step S34 to perform step S34 and subsequent steps.

When the video switching is not selected, or when a selection time has become a time-out period, the switch command corresponding process is ended without the video switching being performed.

FIG. 31 is a flowchart of assistance in explaining a process in a case where the received video switch command is an enable switch command (enable switch command corresponding process).

In step S41, the control section 32 controls various related parts to obtain and analyze a VRT on the basis of the Switching Meta URL of the enable switch command. In step S42, the control section 32 enables viewpoint switching, and indicates to the user that a viewpoint can be switched, by for example displaying arrows indicating directions of viewpoints to which switching can be performed on a screen. The enable switch command corresponding process is then ended.

FIG. 32 is a flowchart of assistance in explaining a process in a case where the received video switch command is a disable switch command (disable switch command corresponding process).

In step S51, the control section 32 invalidates a VRT obtained according to an enable switch command. This disables viewpoint switching. The disable switch command corresponding process is then ended.

The foregoing first to sixth continuous reproduction scenarios are realized by the receiving process described above.

The series of processes described above can be carried out not only by hardware but also by software. When the series of processes is to be carried out by software, a program constituting the software is installed from a program recording medium onto a computer incorporated in dedicated hardware, a general-purpose personal computer, for example, that can perform various kinds of functions by installing various kinds of programs thereon, and the like.

FIG. 33 is a block diagram showing an example of hardware configuration of a computer performing the series of processes described above by a program.

In the computer 100, a CPU (Central Processing Unit) 101, a ROM (Read Only Memory) 102, and a RAM (Random Access Memory) 103 are interconnected by a bus 104.

The bus 104 is further connected with an input-output interface 105. The input-output interface 105 is connected with an input section 106 including a keyboard, a mouse, a microphone, and the like, an output section 107 including a display, a speaker, and the like, a storage section 108 including a hard disk, a nonvolatile memory, and the like, a communicating section 109 including a network interface and the like, and a drive 110 for driving a removable medium 111 such as a magnetic disk, an optical disk, a magneto-optical disk, a semiconductor memory, or the like.

In the computer 100 configured as described above, the CPU 101 for example loads a program stored in the storage section 108 into the RAM 103 via the input-output interface 105 and the bus 104, and then executes the program. Thereby the series of processes described above is performed.

It is to be noted that the program executed by the computer may be a program for performing the processes in time series in the order described in the present specification, or may be a program for performing the processes in parallel or in necessary timing such as at a time of a call being made, for example.

In addition, the program may be processed by one computer, or may be processed by distributed processing by a plurality of computers. Further, the program may be transferred to a remote computer and executed by the remote computer.

In addition, in the present specification, a system refers to an apparatus as a whole formed by a plurality of devices.

It is to be noted that embodiments of the present disclosure are not limited to the foregoing embodiments, and that various changes can be made without departing from the spirit of the present disclosure.

### [Reference Signs List]

| | |
|---|---|
| 10 | Content viewing system |
| 11 | Broadcasting network |
| 12 | Internet |
| 20 | Content transmitting device |
| 21 | Content storage |
| 22 | Command generating section |
| 23 | VRT generating section |
| 24 | Broadcasting section |
| 25 | Distributing section |
| 30 | Content reproducing device |
| 31 | Operating input section |
| 32 | Control section |
| 33 | Tuner |
| 34 | Primary separating section |
| 35 | Retention buffer |
| 36 | Secondary separating section |
| 37 | Decoder |
| 38 | Switch |
| 39 | Communicating I/F |
| 40 | Streaming receiving section |
| 41 | FLUTE processing section |
| 42 | Content storing section |
| 43 | Switch |
| 44 | Decoder |
| 45 | Command analyzing section |
| 100 | Computer |
| 101 | CPU |

## Claims

1. A content supplying device for supplying video contents to a content reproducing device, the content supplying device comprising:
a generating section for generating a video switch command for making the content reproducing device perform a process related to switching of video contents being reproduced;
a broadcasting section for broadcasting the video contents embedded with the generated video switch command via a broadcasting network; and
a distributing section for distributing video contents via an Internet.

2. The content supplying device according to claim 1,
wherein the generating section generates the video switch command as a pre-select command for making a user confirm whether to switch the video contents being reproduced prior to timing of switching of the video contents being reproduced,
a pre-load command for making the video contents as a switching destination obtained prior to the timing of switching of the video contents being reproduced, or
a switch command for making the video contents being reproduced switched.

3. The content supplying device according to claim 2,
wherein the generating section generates the video switch command including an element indicating whether to perform a loopback when returning to a video stream before the switching after switching the video contents being reproduced.

4. The content supplying device according to claim 2,
wherein the generating section generates the video switch command including an element indicating whether to perform user authentication when obtaining the video contents as the switching destination.

5. The content supplying device according to claim 2,
wherein the generating section generates the video switch command as the pre-select command,
the pre-load command,
the switch command,
an enable switch command for setting a state of being switchable to video contents corresponding to a viewpoint specified by the user, or a disable switch command for ending the state of being switchable to video contents corresponding to a viewpoint specified by the user.

6. The content supplying device according to claim 2,
wherein the distributing section also distributes the video contents embedded with the generated video switch command via the Internet.

7. A content supplying method of a content supplying device for supplying video contents to a content reproducing device, the content supplying method comprising:
by the content supplying device,
a generating step of generating a video switch command for making the content reproducing device perform a process related to switching of video contents being reproduced;
a broadcasting step of broadcasting the video contents embedded with the generated video switch command via a broadcasting network; and
a distributing step of distributing video contents via an Internet.

8. A program for making a computer for supplying video contents to a content reproducing device function as:
a generating section for generating a video switch command for making the content reproducing device perform a process related to switching of video contents being reproduced;
a broadcasting section for broadcasting the video contents embedded with the generated video switch command via a broadcasting network; and
a distributing section for distributing video contents via an Internet.

9. A content reproducing device for reproducing video contents supplied from a content supplying device, the content reproducing device comprising:
an obtaining section for obtaining video contents broadcast via a broadcasting network or video contents distributed via an Internet;
an analyzing section for analyzing a video switch command embedded in the obtained video contents; and
a control section for controlling a process related to switching of the video contents being reproduced according to a result of analysis of the video switch command.

10. The content reproducing device according to claim 9,
wherein the video switch command is
a pre-select command for making a user confirm whether to switch the video contents being reproduced prior to timing of switching of the video contents being reproduced,
a pre-load command for making the video contents as a switching destination obtained prior to the timing of switching of the video contents being reproduced, or
a switch command for making the video contents being reproduced switched.

11. The content reproducing device according to claim 10, further comprising
a buffer section for buffering the video contents broadcast via the broadcasting network,
wherein the video switch command includes an element indicating whether to perform a loopback when returning to a video stream before the switching after switching the video contents being reproduced.

12. A content reproducing method of a content reproducing device for reproducing video contents supplied from a content supplying device,
the content reproducing method comprising:
by the content reproducing device,
an obtaining step of obtaining video contents broadcast via a broadcasting network or video contents distributed via an Internet;
an analyzing step of analyzing a video switch command embedded in the obtained video contents; and
a control step of controlling a process related to switching of the video contents being reproduced according to a result of analysis of the video switch command.

13. A program for making a computer for reproducing video contents supplied from a content supplying device function as:
an obtaining section for obtaining video contents broadcast via a broadcasting network or video contents distributed via an Internet;
an analyzing section for analyzing a video switch command embedded in the obtained video contents; and
a control section for controlling a process related to switching of the video contents being reproduced according to a result of analysis of the video switch command.

14. A content viewing system comprising a content supplying device and a content reproducing device,
wherein the content supplying device includes
a generating section for generating a video switch command for making the content reproducing device perform a process related to switching of video contents being reproduced,
a broadcasting section for broadcasting the video contents embedded with the generated video switch command via a broadcasting network, and
a distributing section for distributing video contents via an Internet, and
the content reproducing device includes
an obtaining section for obtaining the video contents broadcast via the broadcasting network or the video contents distributed via the Internet,
an analyzing section for analyzing the video switch command embedded in the obtained video contents, and
a control section for controlling the process related to the switching of the video contents being reproduced according to a result of analysis of the video switch command.
